# FASCICULE DE BREVET EUROPEEN

(11) **EP 0 669 688 B1**
(45) Date de publication et mention de la délivrance du brevet: **01.10.1997**
(21) Numéro de dépôt: 95400398.4
(22) Date de dépôt: 27.02.1995
(51) Int. Cl.: H02G 3/14, H02G 3/10

(54) **Boîte de dérivation**
Abzweigungsgehäuse
Junction box

(30) Priorité: 28.02.1994 FR 9402246
(43) Date de publication de la demande: 30.08.1995
(73) Titulaire: PLANET WATTOHM, 60303 Senlis (FR)
(72) Inventeur: Coutant, Régis, F-60117 Vauciennes (FR); Bacouelle, Hervé, F-60700 Pont Saint Maxence (FR); Thirouin, Stéphane, F-60300 Senlis (FR)
(74) Mandataire: CABINET BONNET-THIRION

(56) Documents cités:
- EP-A- 0 494 571
- FR-A- 1 113 521
- FR-A- 2 609 354

## Description

La présente invention concerne d'une manière générale les boîtes de dérivation du type de celles mises en oeuvre dans certaines installations électriques pour assurer par exemple une certaine répartition de certains au moins de leurs circuits.

Elle vise plus particulièrement celles de ces boîtes de dérivation qui comportent, globalement, de manière distincte, un socle, à fixer à un mur ou à un quelconque autre support, un corps de boîte à solidariser au socle par des moyens de fixation, et une trappe de visite montée mobile entre une position de fermeture pour laquelle elle clôt le corps de boîte et une position d'ouverture pour laquelle elle laisse accès au volume interne de celui-ci.

Dans les boîtes de dérivation de ce type connues à ce jour, les moyens de fixation mis en oeuvre pour la solidarisation du corps de boîte au socle sont usuellement des vis, au nombre par exemple de deux ou quatre, qui interviennent indépendamment de la trappe de visite.

Outre qu'elles constituent de manière dispendieuse des pièces supplémentaires, ces vis nécessitent inévitablement un temps relativement long pour leur mise en place au montage.

La présente invention a d'une manière générale pour objet une disposition permettant avantageusement de s'en affranchir et conduisant en outre à d'autres avantages.

De manière plus précise, elle a pour objet une boîte de dérivation du genre concerné et caractérisée d'une manière générale en ce que la trappe de visite forme par elle-même les moyens de fixation du corps de boîte, ces moyens de fixation comportant au moins une patte de verrouillage, qui est solidaire de cette trappe de visite, et qui, en position de fermeture, s'insère sous un épaulement de retenue solidaire du socle cependant que la trappe de visite porte alors conjointement sur un épaulement d'appui solidaire du corps de boîte et tourné du côté opposé à l'épaulement de retenue précédent.

Autrement dit, il est tiré profit, suivant l'invention, de la trappe de visite, pour assurer directement la solidarisation du corps de boîte au socle, sans de quelconques autres moyens de fixation, et, notamment, sans de quelconques vis.

Il en résulte, avantageusement, et économiquement, un gain de pièce, et, au montage, un gain de temps.

En pratique, le socle comportant une platine sur laquelle fait saillie au moins un pilier, l'épaulement de retenue qui en est solidaire est formé par l'un des flancs d'une rainure affectant transversalement ce pilier et formant une glissière pour la patte de verrouillage que comporte la trappe de visite.

Ainsi, la solidarisation du corps de boîte au socle se fait dans le même mouvement que celui nécessaire à la mise en place de la trappe de visite, au bénéfice, là encore, d'un avantageux gain de temps.

En pratique, également, entre le corps de boîte et la trappe de visite, interviennent, en position de fermeture, des moyens d'encliquetage, dont il résulte que, au terme de sa mise en place, la trappe de visite s'encliquète avantageusement sur le corps de boîte en même temps qu'elle solidarise au socle celui-ci.

Lorsque, par ailleurs, il est prévu, sous la forme d'une pièce distincte, à l'intérieur du corps de boîte, au moins un séparateur propre à compartimenter au moins localement le volume intérieur de celui-ci, des moyens d'encliquetage interviennent, également, suivant un développement de l'invention, entre le socle et ce séparateur, ce qui facilite et rend plus aisée la mise en place de ce dernier.

Suivant un développement complémentaire de l'invention, ce séparateur ne s'étend que sur une fraction de la hauteur du corps de boîte sensiblement égale par exemple à la moitié de cette hauteur, et il est ainsi avantageusement possible de superposer à ce séparateur au moins un autre séparateur, en solidarisant par exemple ce deuxième séparateur au premier par au moins une vis.

La capacité qu'il y a à compartimenter le volume intérieur du corps de boîte se trouve avantageusement accrue d'autant, ce qui peut par exemple faciliter une séparation des divers circuits électriques suivant l'intensité des courants qu'ils véhiculent.

Les caractéristiques et avantages de l'invention ressortiront d'ailleurs de la description qui va suivre, à titre d'exemple, en référence aux dessins schématiques annexés sur lesquels :
la figue 1 est une vue en perspective d'une boîte de dérivation suivant l'invention, pour la position de fermeture de la trappe de visite qu'elle comporte ;
la figure 2 est, avec un arrachement local, une vue en perspective éclatée de cette boîte de dérivation, vue de dessus, et trappe de visite écartée en position d'ouverture ;
la figure 3 en est une autre vue en perspective éclatée, vue de dessous, et trappe de visite encore plus écartée ;
la figure 4 est une vue en perspective du seul socle de cette boîte de dérivation, représenté isolément ;
la figure 5 est, à échelle supérieure, une vue partielle en coupe transversale de ce socle, suivant la ligne V-V de la figure 4 ;
les figures 6, 7 reprennent, à échelle encore supérieure, les détails de la figure 5 repérés par des encarts VI, VII sur cette figure 5 ;
les figures 8, 9 sont, à l'échelle des figures 6, 7, et suivant les lignes VIII-VIII, IX-IX de la figure 2, des vues partielles en coupe transversale du seul corps de boîte de la boîte de dérivation suivant l'invention, représenté isolément ;
la figure 10 est, à échelle différente, et suivant la ligne X-X de la figure 2, une vue en coupe transversale de la seule trappe de visite de cette boîte de dérivation, représentée isolément ;
la figure 11 reprend, à l'échelle de la figure 8, le détail de la figure 10 repéré par un encart XI sur cette figure 10 ;
la figure 12 est, à l'échelle de la figure 10, et avec un arrachement local, une vue de bout de la trappe de visite, suivant la flèche XII de la figure 10 ;
la figure 13 est, à l'échelle de la figure 11, et suivant la ligne XIII-XIII de la figure 12, une autre vue partielle en coupe transversale de cette trappe de visite ;
la figure 14 est, à l'échelle des figures 7 et 9, une vue partielle en coupe transversale de la boîte de dérivation suivant l'invention, pour la position de fermeture de sa trappe de visite ;
la figure 15 est, sensiblement à l'échelle des figures 1 et 2, et avec un arrachement local, une vue en perspective d'un séparateur qu'est susceptible de comporter intérieurement la boîte de dérivation suivant l'invention ;
la figure 16 est, à échelle supérieure, une vue en coupe transversale de ce séparateur, suivant la ligne XVI-XVI de la figure 15 ;
la figure 17 en est une autre vue partielle en coupe transversale, suivant la ligne XVII-XVII de la figure 15 ;
la figure 18 en est, à échelle supérieure, une vue partielle en plan, suivant la flèche XVIII de la figure 15 ;
la figure 19 en est, à l'échelle de la figure 18, une vue partielle en coupe transversale, suivant la ligne XIX-XIX de cette figure 18.

Dans la forme de réalisation représentée sur ces figures, la boîte de dérivation 10 suivant l'invention a, en plan, un contour globalement quadrangulaire, et, en pratique, carré.

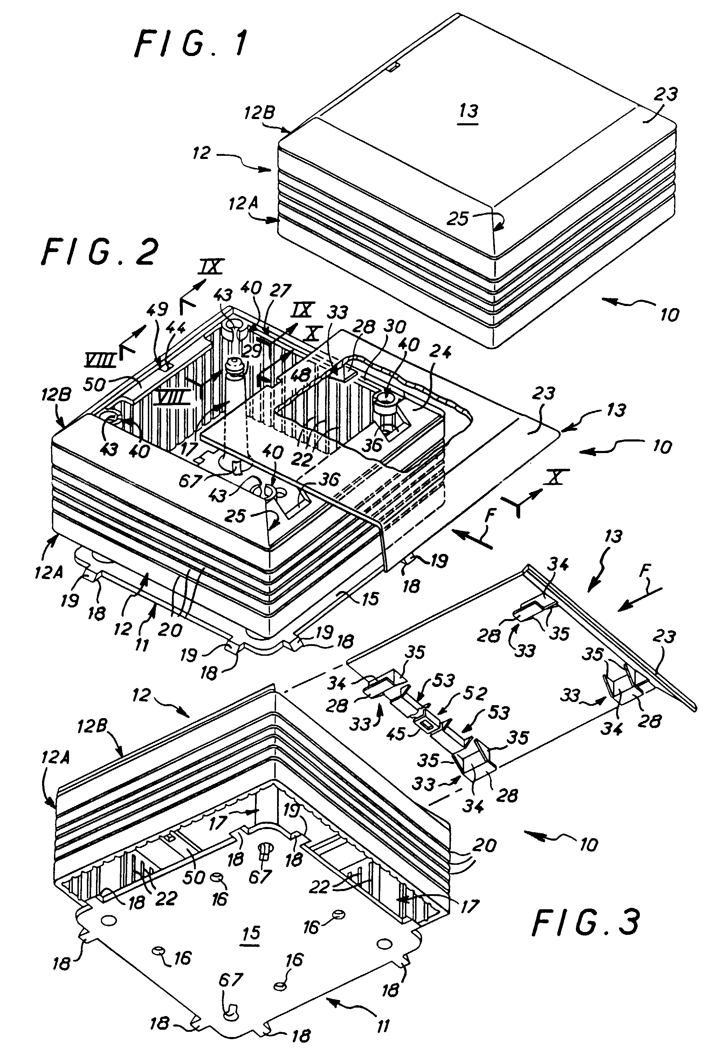

Elle comporte, globalement, de manière connue en soi, un socle 11, à rapporter sur un mur ou un quelconque autre support, un corps de boîte 12, à solidariser au socle 11 par des moyens de fixation précisés ultérieurement, et une trappe de visite 13 qui, suivant des modalités également précisées ultérieurement, est montée mobile entre une position de fermeture, figure 1, pour laquelle elle clôt le corps de boîte 12, et une position d'ouverture, figure 2, pour laquelle elle laisse au contraire accès au volume interne de celui-ci.

De manière également connue en soi, le socle 11 comporte une platine 15, qui, pour sa fixation à un mur ou à un quelconque autre support, présente, dûment répartis sur sa surface, plusieurs perçages 16 propres chacun au passage d'un quelconque organe de fixation, par exemple une vis, et sur laquelle fait saillie, d'un seul tenant, au moins un pilier 17.

Dans la forme de réalisation représentée, le socle 11 comporte quatre piliers 17, qui, répartis en carré ou en rectangle, sont en pratique chacun respectivement disposés dans ses zones d'angle, et qui, extérieurement, ont en pratique une forme globalement tronconique.

Ces piliers 17 s'étendent sensiblement sur toute la hauteur du corps de boîte 12.

Pour des questions de facilité de moulage, ils sont creux.

Dans la forme de réalisation représentée, les bords de la platine 15 du socle 11 sont en retrait par rapport à ceux du corps de boîte 12, pour permettre, si désiré, un léger emboîtement dans celui-ci d'une quelconque goulotte, non représentée, servant de logement aux conducteurs électriques concernés.

Pour le positionnement, et le centrage, du corps de boîte 12 sur le socle 11 de la platine 15, des ergots 18, dûment biseautés par un chanfrein 19, font saillie sur la tranche de cette platine 15, aux extrémités de chacun de ses côtés.

De manière connue en soi, le corps de boîte 12 est dépourvu de tout fond, et il se réduit donc, pour l'essentiel, à une paroi latérale annulaire, qui suit, à distance, le contour de la platine 15 du socle 11.

Dans la forme de réalisation représentée, ce corps de boîte 12 comporte, une partie inférieure 12A cylindrique, qui s'étend perpendiculairement à la platine 15 du socle 11, et une partie supérieure 12B tronc-pyramidale, qui couronne la partie inférieure 12A cylindrique.

Pour y faciliter une éventuelle découpe permettant l'engagement d'une goulotte, la partie inférieure 12A cylindrique présente, extérieurement, des saignées 20, qui, courant annulairement, en étant dûment échelonnées de place en place sur la hauteur de cette partie inférieure 12A cylindrique, s'étendent parallèlement à la platine 15 du socle 11, et, intérieurement, des saignées 22, qui, échelonnées de place en place suivant le périmètre de la partie inférieure 12A cylindrique, s'étendent, elles, perpendiculairement à la platine 15 du socle 11.

Globalement, la trappe de visite 13 se présente, dans la forme de réalisation représentée, sous la forme générale d'une plaquette plane dont le contour, carré, est à l'image de celui du débouché de la partie supérieure 12B tronc-pyramidale du corps de boîte 12.

Sur un côté, cependant, cette trappe de visite 13 comporte, en oblique, dans la forme de réalisation représentée, un bord tombé 23, dont le contour en trapèze est à l'image de celui du côté 24 correspondant de la partie supérieure 12B tronc-pyramidale du corps de boîte 12, et qui, en position de fermeture, vient s'encastrer dans un dégagement 25 prévu en creux à cet effet à la surface de celui-ci.

Les autres côtés 26 de la partie supérieure 12B tronc-pyramidale du corps de boîte 12 forment, conjointement, au débouché de celle-ci, une feuillure 27 à la faveur de laquelle la trappe de visite 13 vient elle-même s'encastrer dans ce corps de boîte 12 en position de fermeture.

Suivant l'invention, la trappe de visite 13 forme par elle-même les moyens de fixation du corps de boîte 12, ces moyens de fixation comportant au moins une patte de verrouillage 28, qui est solidaire de cette trappe de visite 13, et qui, en position de fermeture, s'insère sous un épaulement de retenue 29 solidaire du socle 11 cependant que la trappe de visite 13 porte alors conjointement sur un épaulement d'appui 30 solidaire du corps de boîte 12 et tourné du côté opposé à l'épaulement de retenue 29 précédent.

Dans la forme de réalisation représentée, l'épaulement de retenue 29 est formé par l'un des flancs d'une rainure 32 affectant transversalement un pilier 17 du socle 11, au voisinage de l'extrémité libre de celui-ci, et, plus précisément, par celui de ces flancs qui est tourné vers la platine 15.

Préférentiellement, deux au moins des piliers 17 présentent ainsi une telle rainure 32, et, donc, un épaulement de retenue 29, et, conjointement, la trappe de visite 13 comporte au moins deux pattes de verrouillage 28, en correspondance, chacune respectivement, avec ces deux piliers 17.

Dans la forme de réalisation représentée, la trappe de visite 13 comporte quatre pattes de verrouillage 28, à raison d'une par pilier 17 du socle 11, chacun de ces piliers 17 comportant une rainure 32, et, donc, un épaulement de retenue 29, et, alignées par paires, les pattes de verrouillage 28 de la trappe de visite 13 sont orientées en sens opposés l'une par rapport à l'autre d'une de ces paires à l'autre.

La rainure 32 des piliers 17 du socle 11 forme en pratique une glissière pour les pattes de verrouillage 28 de la trappe de visite 13, parallèlement à sa platine 15.

Pour permettre la mise en place de la trappe de visite 13 quelle que soit l'orientation angulaire du socle 11 sur le support sur lequel il est rapporté, c'est-à-dire pour permettre indifféremment cette mise en place entre deux des piliers 17 du socle 11, suivant une première implantation, ou entre les deux autres de ces piliers 17, suivant une deuxième implantation orthogonale à la précédente, la rainure 32 de chacun de ces piliers 17 s'étend sur 270°, en étant tournée vers l'axe de l'ensemble, et, donc, vers le centre de la platine 15.

Autrement dit, les extrémités de la rainure 32 de chacun des piliers 17 du socle 11 sont d'équerre l'une avec l'autre, et elles s'étendent parallèlement, et perpendiculairement, aux côtés correspondants de sa platine 15, en étant alignées les unes avec les autres d'un des piliers 17 à l'autre.

Corollairement, l'épaulement d'appui 30 que comporte pour la trappe de visite 13 le corps de boîte 12 est formé par le fond de la feuillure 27 présente sur les côtés 26 de la partie supérieure 12B tronc-pyramidale de ce corps de boîte 12.

De sens opposé à l'épaulement de retenue 29 des piliers 17 du socle 11, cet épaulement d'appui 30 du corps de boîte 12 est tourné du même côté que la platine 15 de ce socle 11.

Dans la forme de réalisation représentée, chacune des pattes de verrouillage 28 que comporte la trappe de visite 13 est formée par l'aile libre d'une équerre 33, qui fait saillie sur la surface inférieure de cette trappe de visite 13, d'un seul tenant avec celle-ci, et dont l'autre aile 34 est contrebutée à ses extrémités par des nervures triangulaires de rigidification 35.

Pour le passage des équerres 33 que porte ainsi la trappe de visite 13, le côté 24 de la partie supérieure 12B tronc-pyramidale du corps de boîte 12 présente, à distance l'une de l'autre, en correspondance avec les piliers 17 du socle 11, deux échancrures 36, figure 2.

Dans la forme de réalisation représentée, entre le corps de boîte 12 et le socle 11 interviennent des moyens d'encliquetage.

En pratique, ces moyens d'encliquetage comportent, d'une part, sur le socle 11, un bourrelet 38, qui fait saillie transversalement sur l'un au moins de ses piliers 17, et, en pratique, sur chacun de ceux-ci, sur une partie au moins de la périphérie d'un tel pilier 17, et, d'autre part, sur le corps de boîte 12, au moins un organe d'encliquetage 40, qui est élastiquement déformable, et par lequel le corps de boîte 12 est apte à s'engager au-delà d'un tel bourrelet 38 sur un tel pilier 17.

Dans la forme de réalisation représentée, le bourrelet 38 que comporte chacun des piliers 17 du socle 11 s'étend à l'extrémité libre d'un tel pilier 17, au ras de cette extrémité libre, et, donc, au-dessus de la rainure 32.

En pratique, la portion correspondante des piliers 17 est de section transversale réduite, et elle s'étend en bout d'une portion tronconique 41 de ces piliers 17.

En pratique, également, et pour des questions de facilité de moulage, le bourrelet 38 des piliers 17 ne s'étend que sur une portion de leur périphérie, limitée par exemple à 180° et tournée vers l'axe de l'ensemble, et, donc, vers le centre de la platine 15.

Sur la portion restante de sa périphérie, la partie correspondante des piliers 17 est cylindrique.

Dans la forme de réalisation représentée, l'organe d'encliquetage 40 que comporte corollairement le corps de boîte 12 pour coopérer avec le bourrelet 38 d'un pilier 17 du socle 11 est un anneau ouvert localement par une fente 43.

En pratique, le corps de boîte 12 comporte ainsi quatre organes d'encliquetage 40, à raison d'un par pilier 17 du socle 11, et ces organes d'encliquetage 40 sont donc chacun respectivement disposés dans ses zones d'angle.

En pratique, également, ils s'étendent à niveau avec l'épaulement d'appui 30, en participant donc pour leur part à la constitution de celui-ci.

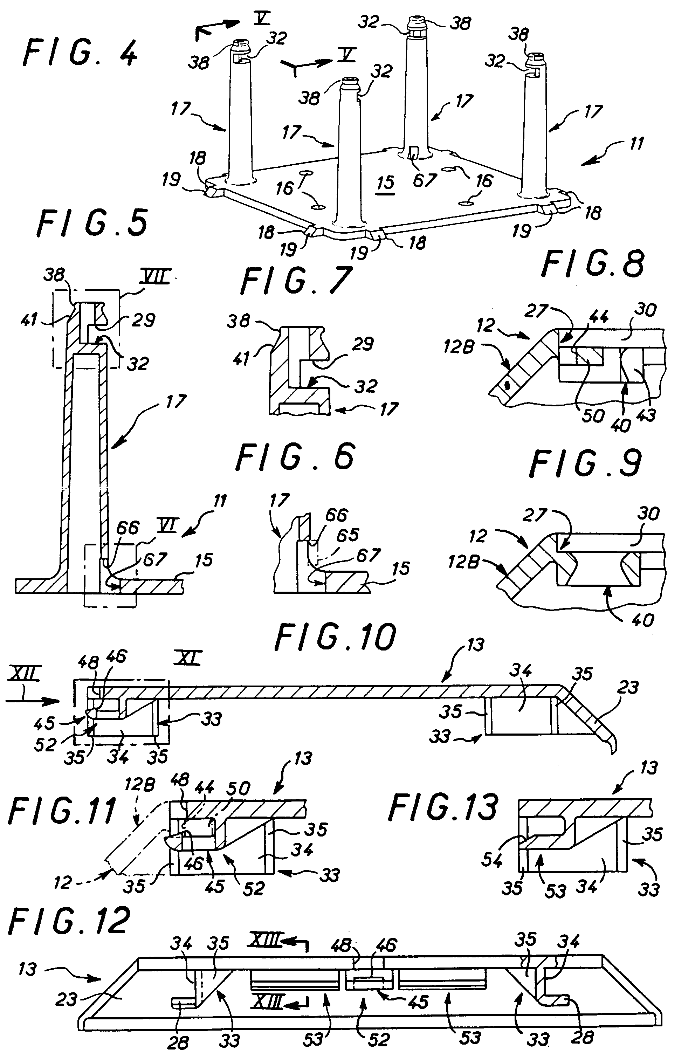

En pratique, enfin, ces organes d'encliquetage 40 ont, intérieurement, en section transversale, un profil en diabolo, figure 9, pour leur crochetage sur le bourrelet 38 d'un pilier 17 du socle 11.

Entre le corps de boîte 12 et la trappe de visite 13 interviennent, également, en position de fermeture, dans la forme de réalisation représentée, des moyens d'encliquetage.

En pratique, ces moyens d'encliquetage comportent, d'une part, sur le corps de boîte 12, un cran 44, et, d'autre part, sur la trappe de visite 13, une languette élastiquement déformable 45, qui porte elle-même un cran 46, pour coopération en crochetage avec celui 44 du corps de boîte 12, et qui est établie au droit d'un évidement 48 de la trappe de visite 13 permettant d'agir sur elle de l'extérieur de celle-ci.

Dans la forme de réalisation représentée, le cran 44 du corps de boîte 12 est formé par l'un des bords d'un évidement 49 affectant une console 50 que présente en saillie vers l'intérieur ce corps de boîte 12 le long du côté 26 de sa partie supérieure 12B tronc-pyramidale opposé au côté 24 de celle-ci présentant les échancrures 36.

Etablie à niveau avec l'épaulement d'appui 30, cette console 50 participe aussi pour sa part à la constitution de cet épaulement d'appui 30.

Conjointement, la languette élastiquement déformable 45 de la trappe de visite 13 est en forme d'anse dans la forme de réalisation représentée, et elle forme l'aile libre d'une équerre 52 que présente en saillie sur sa surface inférieure la trappe de visite 13.

En pratique, dans la forme de réalisation représentée, cette équerre 52 se trouve encadrée, à distance, par deux autres équerres 53, que présente également en saillie sur sa surface inférieure la trappe de visite 13, et qui sont chacune destinées à coopérer en emboîtement avec la console 50 du corps de boîte 12.

Pour faciliter cet emboîtement, la tranche de l'aile libre de ces équerres 53 est biseautée par un chanfrein 54, figure 13.

Au montage, il est d'abord procédé à la mise en place du socle 11 sur le mur ou le support à équiper.

L'installateur a alors avantageusement accès de tous côtés à ce socle 11 pour le câblage à assurer.

Il est procédé ensuite à la mise en place du corps de boîte 12 sur le socle 11, suivant l'implantation la plus favorable à la mise en place ultérieure de la trappe de visite 13.

L'encliquetage du corps de boîte 12 sur les piliers 17 du socle 11 permet avantageusement un maintien provisoire de celui-ci, ce qui libère l'installateur.

Il est procédé, enfin, à la mise en place de la trappe de visite 13.

En pratique, cette mise en place se fait à la manière de celle d'un coulisseau, suivant la flèche F des figures 2 et 3.

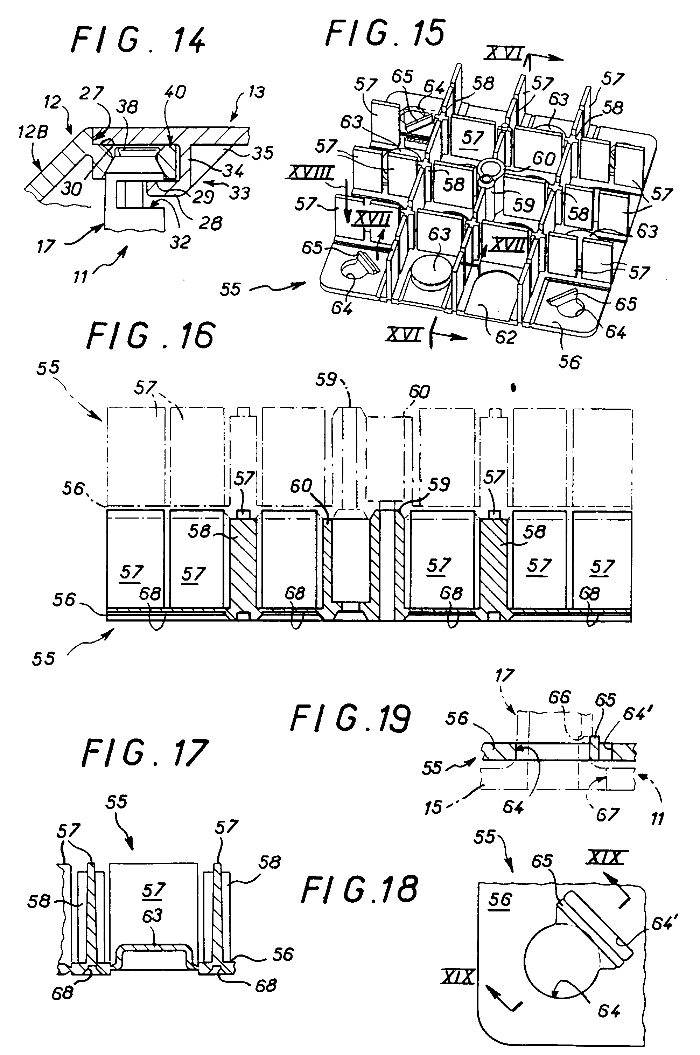

Au terme de cette mise en place, les pattes de verrouillage 28 de la trappe de visite 13 sont chacune respectivement en prise avec la rainure 32 des piliers 17 du socle 11, en portant sur le flanc de cette rainure 32 formant l'épaulement de retenue 29 associé, comme représenté sur la figure 14 pour l'une de ces pattes de verrouillage 28, et, conjointement, la trappe de visite 13 porte sur l'épaulement d'appui 30, de sens opposé, prévu à cet effet sur le corps de boîte 12.

Le corps de boîte 12 se trouve ainsi dûment solidarisé au socle 11.

Corollairement, par venue en prise de son cran 46 avec le cran 44 prévu en correspondance sur le corps de boîte 12, tel que schématisé en traits interrompus sur la figure 11, la trappe de visite 13 se trouve alors elle-même verrouillée de manière débrayable sur ce corps de boîte 12.

Ainsi, la mise en place de la trappe de visite 13 suffit au verrouillage du corps de boîte 12 sur le socle 11 et à son propre verrouillage sur ce corps de boîte 12.

Pour déverrouiller la trappe de visite 13, et ainsi avoir accès au volume interne du corps de boîte 12, il suffit d'agir en conséquence sur sa patte élastiquement déformable 45, par exemple à l'aide de la lame d'un tournevis, à la faveur de l'évidement 48 prévu en correspondance à cet effet.

Il est possible, si désiré, d'équiper intérieurement la boîte de dérivation 10 suivant l'invention d'au moins un séparateur 55, figures 15 à 18, propre à compartimenter au moins localement le volume intérieur du corps de boîte 12.

Dans la forme de réalisation représentée, ce séparateur 55 comporte, d'un seul tenant, d'une part, une platine 56, qui est par exemple destinée à se superposer à la platine 15 du socle 11, et, d'autre part, en saillie sur sa surface supérieure, un réseau quadrillé d'éléments de cloison 57, simples ou jumelés, qui, perpendiculaires à la platine 56, partagent celle-ci en cases et sont préférentiellement détachables pour permettre à l'installateur de constituer à son gré des cheminements de circuit appropriés.

Aux noeuds de ce réseau interviennent des piliers 58 fixes de section cruciforme, et, au centre de l'ensemble, deux puits 59, 60 accolés.

Le puits 59, qui, ainsi qu'il apparaîtra ci-après, est un puits de fixation, s'étend à niveau avec les éléments de cloison 57.

Par contre, le puits 60 s'étend légèrement en retrait par rapport à ces éléments de cloison 57, et il en est de même des piliers 58.

Certaines, au moins, des cases de la platine 56, comportent par ailleurs des opercules défonçables 62.

D'autres, qui sont destinées à venir en correspondance avec les perçages 16 de la platine 15 du socle 11, forment en saillie un dôme 63, pour le logement de la tête de l'organe de fixation correspondant.

Entre le socle 11 et le séparateur 55 ainsi globalement constitué interviennent des moyens d'encliquetage.

Dans la forme de réalisation représentée, ces moyens d'encliquetage comportent, d'une part, sur la platine 56 du séparateur 55, au moins un évidement 64, par lequel ce séparateur 55 peut être engagé sur un pilier 17 du socle 11 et en bordure duquel s'étend une languette élastiquement déformable 65, et, d'autre part, sur un tel pilier 17, un cran 66, figures 4, 5 et 6, avec lequel cette languette élastiquement déformable 65 coopère alors en accrochage.

En pratique, seuls deux piliers 17 du socle 11, disposés en diagonale l'un par rapport à l'autre, comportent un tel cran 66, et ce cran 66, qui est présent à la base de ces piliers 17, s'étend sur la portion de leur périphérie tournée vers le centre de la platine 15.

En pratique, également, ce cran 66 résulte d'un simple évidement 67 affectant conjointement la platine 15 et la base des piliers 17 concernés.

Corollairement, la platine 56 du séparateur 55 comporte au contraire un évidement 64 dans chacune de ses cases d'angle, pour que ce séparateur 55 puisse être rapporté sur le socle 11 suivant l'une ou l'autre de deux orientations orthogonales l'une par rapport à l'autre.

Chaque évidement 64 comporte, au-delà de la languette élastiquement déformable 65 qui le borde, un prolongement 64', pour permettre une déformation élastique, par cintrage, de cette languette élastiquement déformable 65 lors de l'engagement sur un pilier 17 du socle 11.

Au terme de cet engagement, et tel que schématisé en traits interrompus sur la figure 19, la languette élastiquement déformable 65 vient se prendre sous le cran 66 d'un tel pilier 17 concerné lorsqu'il s'agit d'un pilier 17 comportant un tel cran 66.

Dans la forme de réalisation représentée, le séparateur 55 ne s'étend que sur une fraction de la hauteur du corps de boîte 12, en pratique sensiblement égale à la moitié de celle-ci, et, tel que schématisé en traits interrompus sur la figure 16, il est ainsi possible de lui superposer au moins un autre séparateur 55.

Par exemple, ce deuxième séparateur 55 est solidarisé au premier par au moins une vis, non représentée, à la faveur des puits 59, 60, qui, de l'un à l'autre des deux séparateurs 55 ainsi mis en oeuvre, sont alors superposés.

Préférentiellement, et tel que représenté, les éléments de cloison 57 que comportent les séparateurs 55 sont établis au droit de rainures 68, qui affectent la surface inférieure de leur platine 56, et par lesquelles ils peuvent ainsi s'emboîter l'un sur l'autre.

Dans la forme de réalisation représentée, ces rainures 68 ont leurs bords évasés pour faciliter l'emboîtement correspondant.

Bien entendu, la présente invention ne se limite pas à la forme de réalisation décrite et représentée, mais englobe toute variante d'exécution dans le cadre des revendications.

En particulier, il peut n'être prévu qu'un nombre limité de piliers sur le socle, et, par exemple, seulement deux.

## Revendications

1. Boîte de dérivation, du genre comportant un socle (11), un corps de boîte (12) à solidariser au socle (11) par des moyens de fixation, et une trappe de visite (13) montée mobile entre une position de fermeture pour laquelle elle clôt le corps de boîte (12) et une position d'ouverture pour laquelle elle laisse accès au volume interne de celui-ci, caractérisée en ce que la trappe de visite (13) forme par elle-même les moyens de fixation du corps de boîte (12), lesdits moyens de fixation comportant au moins une patte de verrouillage (28), qui est solidaire de ladite trappe de visite (13), et qui, en position de fermeture, s'insère sous un épaulement de retenue (29) solidaire du socle (11) cependant que ladite trappe de visite (13) porte alors conjointement sur un épaulement d'appui (30) solidaire du corps de boîte (12) et tourné du côté opposé à l'épaulement de retenue (29) précédent.

2. Boîte de dérivation suivant la revendication 1, caractérisée en ce que, le socle (11) comportant une platine (15) sur laquelle fait saillie au moins un pilier (17), l'épaulement de retenue (29) est formé par l'un des flancs d'une rainure (32) affectant transversalement ledit pilier (17) et formant une glissière pour la patte de verrouillage (28) que comporte la trappe de visite (13).

3. Boîte de dérivation suivant la revendication 2, caractérisée en ce que la patte de verrouillage (28) que comporte la trappe de visite (13) est formée par l'aile libre d'une équerre (33) en saillie sur sa surface inférieure.

4. Boîte de dérivation suivant l'une quelconque des revendications 2, 3, caractérisée en ce que, le socle (11) comportant au moins deux piliers (17), la trappe de visite (13) comporte au moins deux pattes de verrouillage (28), en correspondance, chacune respectivement, avec lesdits piliers (17).

5. Boîte de dérivation suivant la revendication 4, caractérisée en ce que, le socle (11) comportant, en carré ou en rectangle, quatre piliers (17), la trappe de visite (13) comporte quatre pattes de verrouillage (28), à raison d'une par pilier (17), et, alignées par paires, lesdites pattes de verrouillage (28) sont orientées en sens opposés les unes par rapport aux autres d'une desdites paires à l'autre.

6. Boîte de dérivation suivant l'une quelconque des revendications 1 à 5, caractérisée en ce que, entre le corps de boîte (12) et le socle (11), interviennent des moyens d'encliquetage.

7. Boîte de dérivation suivant la revendication 6, caractérisée en ce que, le socle (11) comportant une platine (15) sur laquelle fait saillie au moins un pilier (17), lesdits moyens d'encliquetage comportent, d'une part, sur ledit socle (11), au moins un bourrelet (38), qui fait saillie transversalement sur ledit pilier (17), sur une partie au moins de la périphérie de celui-ci, et, d'autre part, sur le corps de boîte (12), au moins un organe d'encliquetage (40), qui est élastiquement déformable, et par lequel ledit corps de boîte (12) est apte à s'engager au-delà dudit bourrelet (38) sur ledit pilier (17).

8. Boîte de dérivation suivant la revendication 7, caractérisée en ce que l'organe d'encliquetage (40) que comporte le corps de boîte (12) est un anneau ouvert localement par une fente (43).

9. Boîte de dérivation suivant l'une quelconque des revendications 7, 8, caractérisée en ce que l'organe d'encliquetage (40) que comporte le corps de boîte (12) est à niveau avec son épaulement d'appui (30).

10. Boîte de dérivation suivant l'une quelconque des revendications 1 à 9, caractérisée en ce que, entre le corps de boîte (12) et la trappe de visite (13), interviennent, en position de fermeture, des moyens d'encliquetage.

11. Boîte de dérivation suivant la revendication 10, caractérisée en ce que lesdits moyens d'encliquetage comportent, d'une part, sur ledit corps de boîte (12), un cran (44), et, d'autre part, sur ladite trappe de visite (13), une languette élastiquement déformable (45), qui porte elle-même un cran (46), pour coopération avec celui (44) du corps de boîte (12), et qui est établie au droit d'un évidement (48) de la trappe de visite (13) permettant d'agir sur elle de l'extérieur de celle-ci.

12. Boîte de dérivation suivant l'une quelconque des revendications 1 à 11, caractérisée en ce qu'elle comporte, à l'intérieur du corps de boîte (12), au moins un séparateur (55) propre à compartimenter au moins localement le volume intérieur de celui-ci.

13. Boîte de dérivation suivant la revendication 12, caractérisée en ce que, entre le socle (11) et le séparateur (55), interviennent des moyens d'encliquetage.

14. Boîte de dérivation suivant la revendication 13, caractérisée en ce que, le socle (11) comportant une platine (15) sur laquelle fait saillie au moins un pilier (17), et le séparateur (55) comportant lui-même une platine (56), lesdits moyens d'encliquetage comportent, d'une part, sur la platine (56) dudit séparateur (55), au moins un évidement (64), par lequel ledit séparateur (55) peut être engagé sur le pilier (17) du socle (11) et en bordure duquel s'étend une languette élastiquement déformable (65), et, d'autre part, sur ledit pilier (17), un cran (66) avec lequel ladite languette élastiquement déformable (65) coopère alors en accrochage.

15. Boîte de dérivation suivant l'une quelconque des revendications 12 à 14, caractérisée en ce que le séparateur (55) ne s'étend que sur une fraction de la hauteur du corps de boîte (12) et il est ainsi possible de lui superposer au moins un autre séparateur (55).

16. Boîte de dérivation suivant la revendication 15, caractérisée en ce que le deuxième séparateur (55) est solidarisé au premier par au moins une vis.

17. Boîte de dérivation suivant l'une quelconque des revendications 15, 16, caractérisée en ce que, chacun des séparateurs (55) comportant en saillie sur la surface supérieure de sa platine (56) des éléments de cloison (57), lesdits éléments de cloison (57) sont établis au droit de rainures (68), qui affectent la surface inférieure de cette platine (56), et par lesquelles lesdits séparateurs (55) peuvent s'emboîter l'un sur l'autre.

## Patentansprüche

1. Abzweigungsgehäuse, umfassend einen Sockel (11), einen Gehäusekörper (12), der an dem Sockel (11) durch Befestigungsmittel zu befestigen ist, und eine Zugangsklappe (13), die zwischen einer Verschlußstellung, in der sie den Gehäusekörper (12) verschließt, und einer Öffnungsstellung beweglich montiert ist, in der sie Zugang zu dessen Innenvolumen gibt, dadurch gekennzeichnet, daß die Zugangsklappe (13) durch sich selbst die Befestigungsmittel des Gehäusekörpers (12) bildet, wobei diese Befestigungsmittel mindestens einen Verriegelungslappen (28) umfassen, der mit dieser Zugangsklappe (13) fest verbunden ist und der in Verschlußstellung sich unter eine mit dem Sockel (11) fest verbundene Rückhalteschulter (29) einfügt, während diese Zugangsklappe (13) hierbei gleichzeitig auf einer Auflageschulter (30) aufliegt, die mit dem Gehäusekörper (12) fest verbunden ist und der der vorhergehenden Rückhalteschulter (29) entgegengesetzten Seite zugewandt ist.

2. Abzweigungsgehäuse nach Anspruch 1, dadurch gekennzeichnet, daß, wenn der Sockel (11) eine Platine (15) umfaßt, auf der mindestens eine Säule (17) hervorsteht, die Rückhalteschulter (29) von einer der Flanken einer Nut (32) gebildet ist, die diese Säule (17) in Querrichtung aufweist und die eine Gleitführung für den Verriegelungslappen (28) bildet, den die Zugangsklappe (13) aufweist.

3. Abzweigungsgehäuse nach Anspruch 2, dadurch gekennzeichnet, daß der Verriegelungslappen (28), den die Zugangsklappe (13) aufweist, von dem freien Schenkel eines an ihrer Unterseite hervorstehenden Winkels (33) gebildet ist.

4. Abzweigungsgehäuse nach einem der Ansprüche 2, 3, dadurch gekennzeichnet, daß, wenn der Sockel (11) mindestens zwei Säulen (17) umfaßt, die Zugangsklappe (13) mindestens zwei Verriegelungslappen (28) in Entsprechung jeweils mit diesen Säulen (17) umfaßt.

5. Abzweigungsgehäuse nach Anspruch 4, dadurch gekennzeichnet, daß, wenn der Sockel (11) in einem Quadrat oder einem Rechteck vier Säulen (17) umfaßt, die Zugangsklappe (13) vier Verriegelungslappen (28) umfaßt, und zwar einen pro Säule (17), die paarweise in einer Linie liegen, wobei diese Verriegelungslappen (28) von einem dieser Paare zum anderen in zueinander entgegengesetzten Richtungen gerichtet sind.

6. Abzweigungsgehäuse nach einem der Ansprüche 1 bis 5, dadurch gekennzeichnet, daß zwischen dem Gehäusekörper (12) und dem Sockel (11) Einrastmittel auftreten.

7. Abzweigungsgehäuse nach Anspruch 6, dadurch gekennzeichnet, daß, wenn der Sockel (11) eine Platine (15) aufweist, auf der mindestens eine Säule (17) hervorsteht, diese Einrastmittel einerseits auf diesem Sockel (11) mindestens einen Wulst (38), der auf dieser Säule (17) mindestens auf einem Teil ihres Umfangs in Querrichtung hervorsteht, und andererseits auf dem Gehäusekörper (12) mindestens ein Einrastorgan (40) umfassen, das elastisch verformbar ist und mit dem dieser Gehäusekörper (12) über diesen Wulst (38) auf dieser Säule (17) hinaus aufgesteckt werden kann.

8. Abzweigungsgehäuse nach Anspruch 7, dadurch gekennzeichnet, daß das Einrastorgan (40), das der Gehäusekörper (12) besitzt, ein örtlich durch einen Schlitz (43) geöffneter Ring ist.

9. Abzweigungsgehäuse nach einem der Ansprüche 7, 8, dadurch gekennzeichnet, daß das Einrastorgan (40), das der Gehäusekörper (12) besitzt, mit seiner Auflageschulter (30) in einer Höhe ist.

10. Abzweigungsgehäuse nach einem der Ansprüche 1 bis 9, dadurch gekennzeichnet, daß zwischen dem Gehäusekörper (12) und der Zugangsklappe (13) in Verschlußstellung Einrastmittel auftreten.

11. Abzweigungsgehäuse nach Anspruch 10, dadurch gekennzeichnet, daß diese Einrastmittel einerseits auf diesem Gehäusekörper (12) eine Raste und andererseits auf dieser Zugangsklappe (13) eine elastisch verformbare Zunge (45) aufweisen, die selbst eine Raste (46) zum Zusammenwirken mit der (44) des Gehäusekörpers (12) trägt und die in Höhe einer Aussparung (48) der Zugangsklappe (13) vorgesehen ist, die es gestattet, auf sie vom Äußeren dieser Zugangsklappe aus einzuwirken.

12. Abzweigungsgehäuse nach einem der Ansprüche 1 bis 11, dadurch gekennzeichnet, daß es im Inneren des Gehäusekörpers (12) mindestens ein Trennorgan (55) aufweist, das geeignet ist, dessen Innenvolumen mindestens örtlich zu unterteilen.

13. Abzweigungsgehäuse nach Anspruch 12, dadurch gekennzeichnet, daß zwischen dem Sockel (11) und dem Trennorgan (55) Einrastmittel auftreten.

14. Abzweigungsgehäuse nach Anspruch 13, dadurch gekennzeichnet, daß, wenn der Sockel (11) eine Platine (15) umfaßt, auf der mindestens eine Säule (17) hervorspringt, und das Trennorgan (55) selbst eine Platine (56) umfaßt, diese Einrastmittel einerseits auf der Platine (56) dieses Trennorgans (55) mindestens eine Aussparung (64), durch die dieses Trennorgan (55) auf die Säule (17) des Sockels (11) aufgesteckt werden kann und an deren Rand sich eine elastisch verformbare Zunge (65) erstreckt, und andererseits auf dieser Säule (17) eine Raste (66) umfassen, mit der diese elastisch verformbare Zunge (65) hierbei in Verhakung zusammenwirkt.

15. Abzweigungsgehäuse nach einem der Ansprüche 12 bis 14, dadurch gekennzeichnet, daß sich das Trennorgan (55) nur über einen Teil der Höhe des Gehäusekörpers (12) erstreckt und es so möglich ist, ihm mindestens ein anderes Trennorgan (55) zu überlagern.

16. Abzweigungsgehäuse nach Anspruch 15, dadurch gekennzeichnet, daß das zweite Trennorgan (55) mit dem ersten durch mindestens eine Schraube fest verbunden ist.

17. Abzweigungsgehäuse nach einem der Ansprüche 15, 17, dadurch gekennzeichnet, daß, wenn jedes der Trennorgane (55) auf der Oberseite seiner Platine (56) hervorstehend Trennwandelemente (57) umfaßt, diese Trennwandelemente (57) in Höhe von Nuten (68) angeordnet sind, die auf der Unterseite dieser Platine (56) vorgesehen sind und durch die diese Trennorgane (55) ineinandergreifen können.

## Claims

1. A dividing box of the type comprising a base (11), a box body (12) to be fixed to the base (11) by fixing means, and an inspection hatch (13) mounted movably between a closure position in which it closes the box body (12) and an open position in which it allows access to the internal volume thereof, characterised in that the inspection hatch (13) forms by itself the fixing means for the box body (12), said fixing means comprising at least one locking lug (28) which is fixed with respect to said inspection hatch (13) and which in the closure position is inserted under a retaining shoulder (29) which is fixed with respect to the base (11) while said inspection hatch (13) then jointly bears on a support shoulder (30) which is fixed with respect to the box body (12) and facing the opposite way to the foregoing retaining shoulder (29).

2. A dividing box according to claim 1 characterised in that, the base (11) comprising a plate (15) from which at least one pillar (17) projects, the retaining shoulder (29) is formed by one of the sides of a groove (32) which is provided transversely in said pillar (17) and which forms a sliding guide for the locking lug (28) on the inspection hatch (13).

3. A dividing box according to claim 2 characterised in that the locking lug (28) on the inspection hatch (13) is formed by the free limb of a right-angled portion (33) arranged in projecting relationship on its lower surface.

4. A dividing box according to either one of claims 2 and 3 characterised in that, the base (11) comprising at least two pillars (17), the inspection hatch (13) comprises at least two locking lugs (28) which each respectively correspond with said pillars (17).

5. A dividing box according to claim 4 characterised in that, the box comprising four pillars (17) in a square or rectangular arrangement, the inspection hatch (13) comprises four locking lugs (28), one per pillar (17), and, aligned in pairs, said locking lugs (28) are oriented in opposite directions relative to each other from one of said pairs to the other.

6. A dividing box according to any one of claims 1 to 5 characterised in that latching means are operative between the box body (12) and the base (11).

7. A dividing box according to claim 6 characterised in that, the base (11) comprising a plate (15) on which at least one pillar (17) projects, said latching means comprise on the one hand on said base (11) at least one collar portion (38) which projects transversely on said pillar (17) on a part at least of the periphery thereof and on the other hand on the box body (12) at least one latchinq member (40) which is elastically deformable and by which said box body (12) is capable of engaging beyond said collar portion (38) on said pillar (17).

8. A dividing box according to claim 7 characterised in that the latching member (40) on the box body (12) is a ring which is opened locally by a slot (43).

9. A dividing box according to either one of claims 7 and 8 characterised in that the latching member (40) on the box body (12) is level with its support shoulder (30).

10. A dividing box according to any one of claims 1 to 9 characterised in that latching means are operative in the closure position between the box body (12) and the inspection hatch (13).

11. A dividing box according to claim 10 characterised in that said latching means comprise on the one hand on said box body (12) a tooth (44) and on the other hand on said inspection hatch (13) an elastically deformable tongue (45) which itself carries a tooth (46) for co-operating with the tooth (44) on the box body (12) and which is disposed in line with an opening (48) in the inspection hatch (13) which makes it possible to act on it from the outside of the inspection hatch.

12. A dividing box according to any one of claims 1 to 11 characterised in that in the interior of the box body (12) it comprises at least one separator (55) for at least locally compartmentalising the internal volume of the box body.

13. A dividing box according to claim 12 characterised in that latching means are operative between the base (11) and the separator (55).

14. A dividing box according to claim 13 characterised in that, the base (11) comprising a plate (15) from which at least one pillar (17) projects and the separator (55) itself comprising a plate (56), said latching means comprise on the one hand on the plate (56) of said separator (55) at least one opening (64) by means of which said separator (55) can be engaged on to the pillar (17) on the base (11) and at the edge of which extends an elastically deformable tongue (65) and on the other hand on said pillar (17) a tooth (66) with which said elastically deformable tongue (65) then co-operates in hooking relationship.

15. A dividing box according to any one of claims 12 to 14 characterised in that the separator (55) extends only over a fraction of the height of the box body (12) and it is thus possible for at least one other separator (55) to be arranged thereabove.

16. A dividing box according to claim 15 characterised in that the second separator (55) is fixed with respect to the first by at least one screw.

17. A dividing box according to either one of claims 15 and 16 characterised in that, each of the separators (55) comprising partitioning elements (57) in projecting relationship on the upper surface of the plate (56) of the separators, said partitioning elements (57) are disposed in line with grooves (68) which are provided in the lower surface of said plate (56) and by means of which said separators (55) can fit one on to the other.
